# EUROPEAN PATENT SPECIFICATION

(11) **EP 1 957 819 B1**
(45) Date of publication and mention of the grant of the patent: **13.01.2010**
(21) Application number: 05817502.7
(22) Date of filing: 29.11.2005
(51) Int. Cl.: F16D 48/06

(54) **METHOD FOR CONTROLLING A CLUTCH IN A VEHICULAR DRIVE LINE PROVIDED WITH A FRICTION-TYPE CONTINUOUSLY VARIABLE TRANSMISSION**
VERFAHREN ZUR STEUERUNG EINER KUPPLUNG IN EINEM MIT EINEM STUFENLOSEN REIBGETRIEBE VERSEHENEN FAHRZEUGANTRIEBSSTRANG
PROCEDE DE COMMANDE D UN EMBRAYAGE DANS UNE TRANSMISSION VEHICULAIRE AVEC TRANSMISSION A VARIATION CONTINUE DU TYPE A FRICTION

(43) Date of publication of application: 20.08.2008
(73) Proprietor: ROBERT BOSCH GMBH, 70442 Stuttgart (DE)
(72) Inventor: VAN DONGEN, Antonius Adrianus Helena Maria, NL-5126 PS Gilze (NL)
(74) Representative: Plevier, Gabriel Anton Johan Maria
(86) International application number: PCT/NL2005/000817
(87) International publication number: WO 2007/064187

(56) References cited:
- FR-A- 2 812 589
- FR-A- 2 825 435
- FR-A- 2 857 915
- GB-A- 2 119 050
- US-A- 5 403 250

## Description

The present invention relates to a method for controlling a friction clutch in a vehicular drive line provided with a friction-type continuously variable transmission. Such a control method is well known and is, for instance, described in US-A-4,606,446 in relation with a transmission having two variable pulleys and a drive belt wrapped around and in frictional contact therewith.

A problem generally encountered in friction-type transmission is that slip between the friction components, such as the drive belt and pulleys, needs to be avoided or at least may occur only to a limited extend, since excessive slip results in excessive wear and tear of these components. To prevent such slip, a sufficient normal force is to be applied between the friction components, which normal force is often determined in dependence on the engine torque to be transmitted by the transmission increased by a safety margin. The safety margin is introduced because the engine torque is not at all times accurately known and, moreover, because sudden torque level variations, i.e. torque jolts, may also be introduced into the drive line via the driven wheel or wheels thereof, e.g. when driving over a pothole.

It has been a long-standing development aim to minimise said safety margin, since thereby efficiency and durability of the transmission may be significantly improved. A solution has been found in controlling the friction clutch in such a manner that the torque that is transmitted or transmissible thereby is less than the torque that is maximally transmissible by the transmission, i.e. between the friction components thereof, which is denoted the transmission slip torque hereinafter.

A suchlike clutch control, method is described in the European patent EP-A-1 069 331, wherein a clutch pressure is controlled such that a desired clutch slip is effected. To minimise heat dissipation and associated torque losses the desired clutch slip is preferably small, e.g. a difference between a clutch input side speed and a clutch output side speed of about 5 r.p.m. only. Such a small amount of clutch slip can only be adequately effected by very accurate and very responsive control means that perform a closed-loop clutch control, i.e. that include feed-back means for measuring an actual clutch slip and for determining a control deviation between such measured clutch slip and the desired clutch slip. Moreover, any such control deviation needs to be compensated for quickly by the appropriate adjustment of the clutch pressure, for instance a very high sample-rate must be used for measuring the actual clutch slip and only a fast filter may be applied to the measurement signal.

A problematic side-effect of such a responsive control means is that in principle also the torque jolts are compensated for, i.e. the desired clutch slip will be maintained even during the torque jolt, simply -although unwantedly- passing it on to the transmission. One possible solution for this problem has been proposed in the international patent publication WO-A-02/23059. According to this known solution the clutch slip still is allowed to increase up to a certain threshold value. Thus initially, i.e. when the clutch slip increases in response to the torque jolt, the latter is not or at least only partly passed on the transmission. Only thereafter, when the clutch slip is prevented from freely increasing further and is controlled back to its desired value by increasing the clutch pressure, the torque level to be transmitted by the transmission increases. At this stage, however, sufficient time has passed for the control system of the transmission to increase its maximum transmissible torque by increasing the said normal force between the friction components thereof.

This known solution has the drawback that it is relatively complicated, because the control of the clutch slip is integrated with the control of the transmission normal force. Also, this known control method does not differentiate between an increase in clutch slip due to the said torque jolt, or due to an increase of the engine torque initiated by the driver. This means that during a driver initiated vehicle acceleration, the clutch's capacity to suppress a torque jolt will be diminished.

Accordingly, it is an aim of the present invention to provide for a clutch control method suitable for suppressing torque jolts, preferably mitigating the drawbacks of the above known control method. To this end the invention provides for the clutch control method of claim 1.

The control method of claim 1 is **characterised in that** the control of the clutch slip is normally performed closed-loop, i.e. including the steps of measuring an actual clutch slip, determining a control deviation between such measured value and a desired value for the clutch slip and activating the clutch, e.g. by adjusting the clutch engagement pressure, so as to minimise such control deviation, whereas when the occurrence of a torque jolt is detected, the clutch slip is controlled open-loop by activating the clutch in accordance with a prescribed clutch torque characteristic, e.g. linking the torque level transmissible by the clutch to a clutch engagement force or pressure level.

The French patent publications FR-A-2 857 915 and FR-A-2 812 589 both disclose a drive line system with an hydraulically operated clutch and an automatic transmission provided between a combustion engine and a driven wheel. An engagement pressure of the clutch is controlled closed loop in relation to the desired engine torque and the input and output speeds of the clutch. However, in case a rapid change in the desired engine torque occurs such clutch control is effected open loop instead. According to these latter two publications, the said open loop clutch control can be executed more quickly than the said closed loop control, i.e. the clutch engagement pressure can be adjusted more rapidly and follow the said rapid torque changes effectively in case of the said open loop control.

The occurrence of the torque jolt is thereby linked to and detected by a wheel speed gradient exceeding a certain absolute threshold value.

Preferably also, the said prescribed clutch torque characteristic used for the open-loop clutch slip control is adapted when the clutch slip control is performed closed loop, by recording and processing the amount of clutch activation, e.g. the clutch engagement pressure that is actually applied for transmitting the engine torque.

According to the invention, it is returned from the open-loop to the closed loop clutch control based on the fulfilment of an appropriate condition, such as the condition that no further torque jolt is detected, that the measured clutch slip falls below a prescribed maximum threshold value, i.e. after the torque jolt has been largely dissipated by the clutch, or that the maximum transmissible torque of the transmission has been sufficiently increased for coping with the increased torque level. Preferably, the fulfilment of such condition is only taken into account after a defined time has lapsed since the open-loop clutch control has been engaged, which mode is entered when torque jolts continue to occur in close succession. Hereby, such full-safe mode may consist of sufficiently increasing the maximum transmissible torque of the transmission followed by increasing the clutch engagement pressure to fully close the clutch, i.e. eliminating clutch slip altogether.

The above and other aspects of the invention, which will become apparent from the detailed description below, are illustrated in the accompanying drawings, in which:
Figure 1 is a schematic representation of a vehicular drive line provided with an engine, a continuously variable transmission, a friction clutch, a final drive mechanism and driven wheels, as well as clutch slip control means;
Figure 2 is a block diagram illustrating the clutch control method in accordance with the present invention.

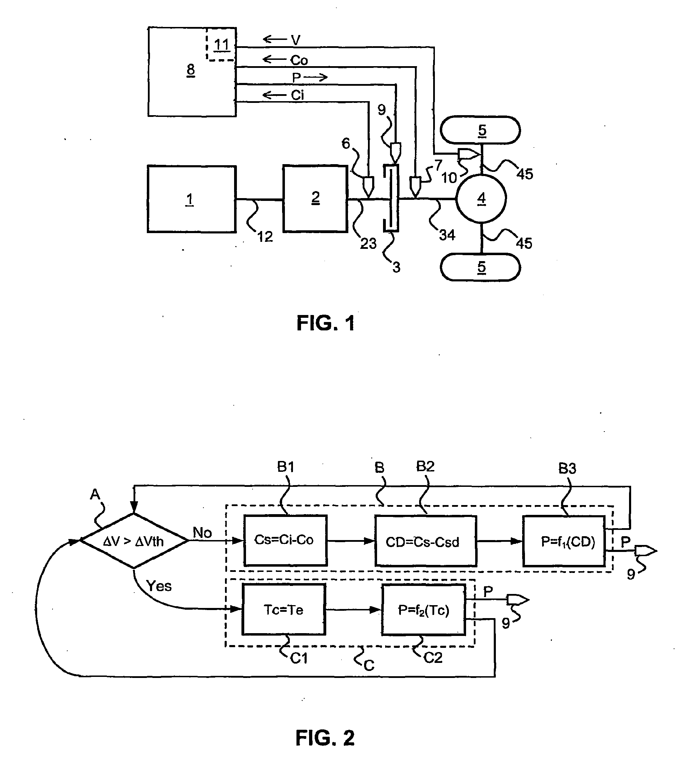

Figure 1 depicts a vehicular drive line, which subsequently, i.e. downstream in the direction of the driving force, comprises an engine 1, a friction-type continuously variable transmission 2, a friction clutch 3, a final drive 4 mechanism including a differential gearing and two driven wheels 5. Drive shafts 12, 23, 34 and 45 are provided between and drivingly connect each of the above drive line components 1-5. Also clutch slip control means are schematically indicated in figure 1, which means comprises two rotational speed sensors 6 and 7 for measuring a clutch input side, i.e. shaft 23, speed Ci and a clutch output side, i.e. shaft 34, speed Co and an electronic clutch, control unit 8 or "ECCU" and a clutch actuator 9 for controlled activation of the clutch 3, e.g. by adjusting a hydraulic clutch engagement pressure P.

Hereby it is known to arrange and operate the ECCU 8 such that a desired amount of clutch slip Cs is effected between the input side speed Ci and output side speed Co, i.e. Cs=Ci-Co. In this arrangement, when a torque jolt is introduced in the drive line via a driven wheel 5, the clutch 3 will not merely transmit such increased torque level, but rather will to a large extend dampen the torque jolt by dissipating the mechanical energy associated therewith by an increase of the clutch slip Cs. Accordingly, the torque jolt is largely prevented form travelling upstream through the drive line, thereby protecting the transmission 2 against slip and allowing a comparatively low safety margin to be applied.

The present invention provides for a favourably simple and effective method for controlling the clutch 3 in the above-described manner, which method is schematically illustrated in the block diagram of figure 2.

The control method according to the invention incorporates the steps of:
- detecting the occurrence of a torque jolt in block A and:
   I) if no such torque jolt is detected performing closed-loop clutch control according to the steps of:
      - measuring an actual clutch slip Cs based on the signals Ci, Co generated by the rotational speed sensors 6 and 7 in block B1;
      - determining a control deviation CD between such measured clutch slip Cs and a desired value therefor Csd in block B2; and
      - activating the clutch 3, e.g. by adjusting the clutch engagement pressure P so as to minimise such control deviation CD in block B3, which activation in this example is based on a certain transfer function f₁;
   II) if a torque jolt is detected performing open-loop clutch control in block C, at least by maintaining the torque Tc transmissible by the clutch 3 at a constant level, e.g. by maintaining the clutch engagement pressure P, but preferably by regulating the torque Tc transmissible by the clutch 3 according to the steps of:
      - determining the torque Te generated by the engine in block C1;
      - activating the clutch 3 in accordance with a prescribed clutch torque characteristic f₂, wherein the torque Tc transmissible by the clutch 3 is linked to, for example, a clutch engagement pressure P, such that it is able to transmit the engine torque Te in block C2.

According to the invention the detection of the torque jolt in block A is linked to a wheel speed gradient ΔV exceeding a certain threshold value ΔVth. Hereby, the speed V of a driven wheel 5 may be detected by means of the clutch output speed sensor 7 or by means of special rotational speed sensor 10 (see figure 1) for directly measuring the wheel speed V. The gradient ΔV of the wheel speed V is then determined by an electronic differentiator 11, which may be part of the ECCU 8.

In the control method illustrated in figure 2 it is returned from the open-loop to the closed loop clutch control when the torque jolts has passed, i.e. when the wheel speed gradient ΔV no longer exceeds the threshold value ΔVth, as determined in block A. However, other possibilities, i.e. conditions to be fulfilled are conceivable, such as firstly increasing the maximum transmissible torque of the transmission to be able to cope with an increased torque level and secondly either returning to the closed loop clutch control or, alternatively, fully closing the clutch in a so-called full safe mode of the control method.

## Claims

1. Method for controlling a friction clutch (3) in a vehicular drive line further provided with an engine (1), a friction-type continuously variable transmission (2) and a driven wheel (5), the method comprising the step controlling a slip value (Cs) of the clutch (3), **characterised in that** the method further comprises the step of detecting the occurrence of a torque jolt (block A) by detecting a gradient (ΔV) of a rotational speed (V) of the driven wheel (5) and by linking the occurrence of the torque jolt to such wheel speed gradient (ΔV) exceeding a threshold value (ΔVth), in which method, if no such torque jolt is detected, the clutch slip (Cs) control is performed closed-loop (block B), or, if a torque jolt is detected, the clutch slip (Cs) control is performed open-loop (block C) to supress the torque jolt.

2. Method according to claim 1, **characterised in that** the closed-loop clutch control (block B) includes the steps of:
- measuring the actual clutch slip (Cs) based on signals (Ci, Co) generated by rotational speed sensors (6, 7) that are respectively associated with the input side (shaft 23) of the clutch (3) and its output side (shaft 34),
- determining a control deviation (CD) between such measured clutch slip (Cs) and a desired value therefor (Csd) and
- activating the clutch (3) so as to minimise such control deviation (CD);
and **in that** the open-loop clutch control (block C) includes the steps of:
- determining the torque (Te) generated by the engine (1) and
- activating the clutch (3) in accordance with a prescribed clutch torque characteristic (f₂), wherein the torque (Tc) transmissible by the clutch (3) is linked to a clutch engagement force or pressure (P) so that it is able to transmit the engine torque (Te).

3. Method according to claim 1 or 2, **characterised in that** the said clutch torque characteristic (f₂) is adapted during closed-loop clutch control (block B) by determining the clutch engagement force or pressure level (P) that is actually applied when transmitting the engine torque (Te).

## Patentansprüche

1. Verfahren zur Steuerung einer Reibkupplung (3) in einem Fahrzeugantriebsstrang, der weiterhin mit einem Motor (1), einem stufenlos verstellbaren Reibgetriebe (2) und einem angetriebenen Rad (5) versehen ist, wobei das Verfahren den Schritt des Steuerns eines Schlupfwertes (Cs) der Kupplung (3) umfasst, **dadurch gekennzeichnet, dass** das Verfahren weiterhin den Schritt des Erfassens des Auftretens eines Drehmomentrucks (Block A) durch Erfassen eines Gradienten (ΔV) einer Drehzahl (V) des angetriebenen Rads (5) und durch Koppeln des Auftretens des Drehmomentrucks mit solch einem Raddrehzahlgradienten (ΔV), der einen Schwellwert (ΔVth) überschreitet, umfasst, wobei bei dem Verfahren, wenn kein solcher Drehmomentruck erfasst wird, die Steuerung des Kupplungsschlupfes (Cs) in einem geschlossenen Regelkreis (Block B) durchgeführt wird, oder wenn ein Drehmomentruck erfasst wird, die Steuerung des Kupplungsschlupfes (Cs) in einem offenen Regelkreis (Block C) durchgeführt wird, um den Drehmomentruck zu unterdrücken.

2. Verfahren nach Anspruch 1, **dadurch gekennzeichnet, dass** die Kupplungssteuerung im geschlossenen Regelkreis (Block B) die folgenden Schritte enthält:
- Messen des Istkupplungschlupfes (Cs) auf Grundlage von Signalen (C1, Co), die durch Drehzahlsensoren (6, 7) erzeugt werden, die der Eingangsseite (Welle 23) der Kupplung (3) bzw. ihrer Ausgangsseite (Welle 34) zugeordnet sind,
- Bestimmen einer Steuerabweichung (CD) zwischen solch einem gemessenen Kupplungsschlupf (Cs) und einem Sollwert dafür (Csd) und
- Aktivieren der Kupplung (3), um solch eine Steuerabweichung (CD) zu minimieren;
und dass die Kupplungssteuerung mit offenem Regelkreis (Block C) die folgenden Schritte enthält:
- Bestimmen des Drehmoments (Te), das von dem Motor (1) erzeugt wird, und
- Aktivieren der Kupplung (3) gemäß einem fest vorgegebenen Kupplungsdrehmomentkennwert (f₂), wobei das von der Kupplung (3) übertragbare Drehmoment (Tc) mit einer Kupplungseingriffskraft oder einem Kupplungseingriffsdruck (P) gekoppelt ist, so dass sie das Motordrehmoment (Te) übertragen kann.

3. Verfahren nach Anspruch 1 oder 2, **dadurch gekennzeichnet, dass** der Kupplungsdrehmomentkennwert (f₂) während der Steuerung mit geschlossenem Regelkreis (Block B) angepasst wird, indem die Kupplungseingriffskraft oder die Kupplungsdruckhöhe (P) bestimmt wird, die tatsächlich angelegt wird, wenn das Motordrehmoment (Te) übertragen wird.

## Revendications

1. Procédé pour commander un embrayage à friction (3) dans une chaîne de transmission véhiculaire pourvue en outre d'un moteur (1), d'une transmission à variation continue du type à friction (2) et d'une roue entraînée (5), le procédé comprenant l'étape consistant à commander une valeur de glissement (Cs) de l'embrayage (3), **caractérisé en ce que** le procédé comprend en outre l'étape de détection de l'apparition d'une secousse de couple (bloc A) en détectant un gradient (ΔV) d'une vitesse de rotation (V) de la roue entraînée (5) et en associant l'apparition de la secousse de couple au gradient de vitesse de roue (ΔV) qui dépasse une valeur seuil (ΔVth), dans lequel procédé, si aucune secousse de couple de ce type n'est détectée, la commande du glissement de l'embrayage (Cs) est effectuée en boucle fermée (bloc B), ou, si une telle secousse de couple est détectée, la commande du glissement de l'embrayage (Cs) est effectuée en boucle ouverte (bloc C) pour supprimer la secousse de couple.

2. Procédé selon la revendication 1, **caractérisé en ce que** la commande d'embrayage en boucle fermée (bloc B) comporte les étapes consistant à :
- mesurer le glissement d'embrayage effectif (Cs) sur la base de signaux (Ci, Co) générés par des capteurs de vitesse rotationnelle (6, 7) qui sont respectivement associés au côté d'entrée (arbre 23) de l'embrayage (3) et à son côté de sortie (arbre 34),
- déterminer un écart de commande (CD) entre un tel glissement d'embrayage mesuré (Cs) et une valeur souhaitée pour celui-ci (Csd) et
- activer l'embrayage (3) de manière à minimiser un tel écart de commande (CD) ;
et **en ce que** la commande d'embrayage à boucle ouverte (bloc C) comporte les étapes consistant à :
- déterminer le couple (Te) généré par le moteur (1) et
- activer l'embrayage (3) conformément à une caractéristique de couple d'embrayage prescrite (f₂), le couple (Tc) pouvant être transmis par l'embrayage (3) étant lié à une force ou une pression d'engagement d'embrayage (P) de sorte qu'il puisse transmettre le couple du moteur (Te).

3. Procédé selon la revendication 1 ou 2, **caractérisé en ce que** ladite caractéristique de couple d'embrayage (f₂) est adaptée au cours de la commande d'embrayage en boucle fermée (bloc B) en déterminant le niveau de force ou de pression d'engagement de l'embrayage qui est effectivement appliqué lors de la transmission du couple du moteur (Te).
